# EUROPÄISCHE PATENTANMELDUNG

(11) **EP 2 048 122 A1**
(43) Veröffentlichungstag der Anmeldung: **15.04.2009**
(21) Anmeldenummer: 08017538.3
(22) Anmeldetag: 07.10.2008
(51) Int. Cl.: C03C 25/14, C03C 25/26, C03C 25/40

(54) **Wässriges Sizing zur Herstellung von Glasfaserprodukten**

(30) Priorität: 12.10.2007 DE 102007049240
(71) Anmelder: S.D.R. Biotec Verfahrenstechnik GmbH, 04509 Neukyhna/OT Pohritzsch (DE)
(72) Erfinder: Teschner, Roman, Dr., 04509 Delitzsch (DE); Richter, Kati, 04509 Delitzsch / OT Pohritzsch (DE); Richter, Hans-Peter, Dr., 04509 Delitzsch / OT Pohritzsch (DE)
(74) Vertreter: Müller, Volkmar

(57) **Zusammenfassung**

Die vorliegende Erfindung betrifft ein wässriges Sizing zur Behandlung von Glasfasern, insbesondere für die Herstellung von Rovingfasern, Glasstapelfasern und geschnittenen Verstärkungsfasern aus einem thermisch und chemisch beständigen Glas, sowie mit dem erfindungsgemäßen Sizing beschichteter Glasfasern.

## Beschreibung

Die vorliegende Erfindung betrifft eine wässriges Sizing, auch als finishähnliche Präparation (Sizing) bezeichnet, zur Behandlung von Glasfasern, insbesondere für die Herstellung von Rovingfasern, Glasstapelfasern und geschnittenen Verstärkungsfasern aus einem thermisch und chemisch beständigen Glas, sowie mit dem erfindungsgemäßen Sizing beschichteter Glasfasern.
Die Glasfasern, unabhängig von ihrer chemischen Zusammensetzung, sind knick- und scheuerempfindlich.
Schon während des Faserziehprozesses muss deswegen durch Schlichteauftrag Vorsorge getroffen werden, um die Glasfasern gegen die Scheuerwirkung von Glas auf Glas bzw. Glas auf Ziehtrommel und somit vor der Gefahr einer mechanischen Beschädigung zu schützen. Dies wird durch das Auftragen einer Schlichte (Sizing) erreicht.

Die Zusammensetzung der Schlichte beeinflusst nicht nur den Geschlossenheitsgrad, die Steifigkeit, die Härte, die Oberflächenbeschaffenheiten der Glasfaserprodukte sondern auch die technologischen Prozesse, wie z.B. den Faserziehprozess, das Wickeln (Spulenaufbau), den Trocknungsprozess und insbesondere die Weiterverarbeitbarkeit (Weben, Schneiden) der Textilglasfasern.
Im Webprozess ist die Verschneidbarkeit, die Schiebefestigkeit der Kett- und Schussfäden als auch die Reibung und Schädigung der Glasfilamente (Faserflug, Abrisse) von der Schlichtenzusammensetzung abhängig.
Derartige Schlichten sind als stärkehaltige, so genannte Textilschlichten und als haftmittelhaltige, so genannte Kunststoffschlichten bekannt. Die stärkehaltigen Schlichten enthalten im Gegensatz zu den Kunststoffschlichten meistens keinen Haftvermittler.

Die wässrigen Schlichten für Textilglasfasern bestehen vorwiegend aus einem oder mehreren Filmbildner, einem Gleitmittel, einem Netzmittel und einem oder mehreren Haftvermittlern (Kupplungsmitteln, Primer).

Ein Filmbildner verleiht den Textilglaserzeugnissen die erforderliche Integrität, schützt die Glasfilamente vor gegenseitiger Reibung und trägt zur Affinität zum Bindemittel bzw. Kunststoffmatrix damit zur Festigkeit des Endproduktes (z.B. Verbundwerkstoff) bei. Als Filmbildner werden Stärkederivate, Polymere und Copolymere von Vinylacetat von Acrylestern, Epoxidharzemulsionen, Epoxypolyesterharze [EP-A-0 027 942], Polyurethanharze, Polyolefinharze bzw. Mischemulsionen von Polyvinylacetat und Polystyrol [Jap. Pat. SHO-48(1973)-28997] in einem Anteil von 0,1 bis 12 Massenprozent (Ma.-% = Gew.-%) angewendet.

Ein Gleitmittel in den wässrigen Schlichten verleiht dem Glasfaserprodukt (wie z.B. Roving) die notwendige Geschmeidigkeit und setzt die gegenseitige Reibung der Glasfasern sowohl während der Herstellung als auch während der Weiterverarbeitung, z.B. Weben, herab.
Die meisten Gleitmittel beeinträchtigen die Haftung zwischen Glas und Bindemittel. Als Gleitmittel werden z.B. Fette, Öle, Wachse, Polyalkylenamine in einer Menge von 0,01 bis 1,0 Ma.-% eingesetzt.
Ein Netzmittel, als Komponente einer wässrigen Schlichte, setzt die Oberflächenspannung vom Wasser herab und verbessert damit die Benetzung der Filamente mit der Schlichte.
Als Netzmittel werden in die wässrige Schlichte, z.B. Polyfettsäureamide in einer Menge von 0,1 bis 1,5 Ma.-%, eingeführt.

Die meisten Harze (Polymere) weisen keine Affinität zum Glas auf. Durch Haftmittel (Primer) wird zwischen Glas und Harz eine "Brücke" geschaffen, die eine vollständige Kraftübertragung im Verbund ermöglicht. Die Haftvermittler erhöhen die Adhäsion von Polymeren an der Glasoberfläche. Als Haftmittel dienen meistens organofunktionelle Silane, wie z.B. γ-Aminopropyltiethoxysilan, γ-Methacryloxypropyltimethoxysilan, γ-Glycidyloxypropyl-trimethoxysilan u.a,. deren Menge in der Schlichte von 0,2 bis 1,0 Ma.-% beträgt.
Bevor die Silane der wässrigen Schlichte zugesetzt werden, werden sie meistens zu Silanolen hydrolysiert.
Die Hydrolysatlösung ist nur begrenzt stabil und neigt zur Kondensation.
Die Silanole reagieren mit der reaktiven Glasoberfläche und bilden eine Haftmittelschicht mit einer Dicke von ca. 5 nm, die sich wie ein Schutzschleier über die Faseroberfläche zieht. Der Schutzschleier, der als Oligomer anfangs noch löslich ist, kondensiert später zu vernetzten Strukturen und liegt am Ende als ein
Siloxan ≡ Si - O - Si ≡ vor.
Die haftmittelhaltigen Schlichten können außer einem Primer noch andere Zusätze, wie z.B. Antistatika, Emulgatoren, Stabilisatoren und Biocide, durch die spezielle Wirkungen erreicht werden sollen, enthalten.
Diese weiteren Hilfskomponenten sind allgemein bekannt und beispielsweise in K. L. Löwenstein - The Manufacturing Technology of Continuous Glass Fibres, Elsevier Scientific Publishing Corp. Amsterdam - Oxford New York, 1983 beschrieben.

Für bestimmte Anwendungen der Glasfasern muss die Schlichte, insbesondere die textile Schlichte entfernt werden, bevor die Glasfaserprodukte im Composite zum Einsatz kommen. Die Entschlichtung wird durch chemische bzw. durch thermische Behandlung realisiert. Dabei wird durch eine abschließende Gewebebehandlung der entsprechende Haftvermittler aufgebracht.
Der Entschlichtungsprozess, insbesondere die thermische Entschlichtung, beeinträchtigt die Faser, somit die Gewebefestigkeit und letztendlich die Festigkeit der daraus hergestellten Composite. Unmittelbar nach der Entschlichtung wird das von der Schlichte befreite Gewebe mit der dazu vorgesehenen, hydrolysierten Silan-Lösung bzw. Silanol (nach der Hydrolyse) versehen.

Der kontinuierliche Ausrüstungsvorgang findet in einem Tränkbad, direkt nach dem Verlassen des Entschlichtungsofens statt. Danach wird das Gewebe getrocknet und aufgewickelt. Die reine Polysiloxanschicht, die am Ende auf der Glasfaseroberfläche vorliegt, verleiht dem Gewebe oft eine gewisse Steifigkeit, die zu Schädigung der Filamente während der Weiterverarbeitung führen kann.
Der Entschlichtungsprozess wie auch das Aufbringen der Finish-Lösung verschlechtern die Prozess-Effektivität und tragen zur Erhöhung der Produktionskosten bei.
Aufgabe der vorliegenden Erfindung ist es, eine besonders für R-, E-, ECR-, und S-Glasfasern geeignete finishähnliche Präparation mit einer guter chemischer Beständigkeit aufzuzeigen, welche die Behandlung von o.a. Glasfasern und ihre physikalisch-chemische Eigenschaften deutlich verbessert. Die finishähnliche Präparation soll ermöglichen, auf den Entschlichtungsvorgang zu verzichten und damit die Fasern nicht zu beeinträchtigen.
Die erfindungsgemäße, chemisch beständige finishähnliche Präparation sollte dem Webroving außerdem gute Verarbeitungseigenschaften (Integrität, Verschneidbarkeit, Gleitfähigkeit, Schiebefestigkeit) verleihen.
Das aus dem Roving hergestellte Gewebe soll neben einer zufrieden stellenden Griffigkeit, d. h. die Fasern sollen nicht stumpf, nicht spröde und etwa halbweich sein, auch ein gutes Penetrationsvermögen, d. h. eine Migration der Harze zwischen Einzelfilamenten, für Polymerharze, wie z.B. Polyester- oder Epoxidharze, aufweisen.
Die aus dem Gewebe angefertigten Composits sollen im Vergleich mit dem entschlichteten Gewebe wesentlich bessere mechanische Eigenschaften, insbesondere bezüglich Festigkeit (Zug-, Druck-, Biege- und Schlagbiegefestigkeit), aufweisen.

Diese Aufgabe wird durch ein wässriges Sizing (eine wässrige finishähnliche Präparation) gemäß den Merkmalen des Anspruchs 1 gelöst.

Erfindungswesentlich ist, dass das ein wässrige Sizing , neben Wasser und CH₃COOH, ausschließlich aus einem Netzmittel, wobei die Netzmittelmenge in der Zusammensetzung unter 0,0015% Ma.-% liegt, einem Zweikomponenten-Filmbildner und einem Ein- oder aus einem Zweikomponenten-Haftvermittler besteht.

Die Behandlung von R-, E-, ECR- und S-Glasfasern mit diesem wässrigen Sizing (wässrigen finishähnlichen Präparation) hat den Erfolg, dass trotz fehlenden bisher typischen Schlichtenkomponenten, wie ein Gleitmittel oder ein Netzmittel, den Glasfasern und dem Gesamtfaden (Faserbündel) gute Verarbeitungseigenschaften während ihrer Herstellung sowie späteren Verarbeitung verliehen werden.
Es hat sich überraschenderweise herausgestellt, dass das erfindungsgemäße wässrige Sizing eine gute Gleitfähigkeit und zufrieden stellende Schiebefestigkeit der Kett- und Schussfäden im Webprozess gewährleisten. Dies spiegelt sich insbesondere in der Festigkeit des Gewebes und der daraus hergestellten Composite wider.

Des Weiteren ist festzustellen, dass die erfindungsgemäße wässrige finishähnliche Präparation mit Filmbildnern und mit einem Haftvermittler als wesentliche Bestandteile auskommt und erlaubt, auf die sich negativ auf die Fasern auswirkende Entschlichtung, zu verzichten.
Dies trägt zur Vereinfachung und rationellen Arbeitsweise bei der Weiterverarbeitung der Glasfasern bei(Verfahren).

Die Unteransprüche 2 bis 8 zeigen vorteilhafte Ausgestaltungen des
erfindungsgemäßen wässrigen Sizing (wässrigen finishähnlichen Präparation) auf, ohne diese abschließend zu beschreiben.

In den zahlreichen durchgeführten Versuchen und Tests hat sich herausgestellt, dass die im Sinne der Erfindung geforderten und notwendigen Glasfaser- und Glasfaserbündeleigenschaften besonders erreicht werden, wenn die Glasfasern mit wässriger finishähnlicher Präparation folgender chemischer Zusammensetzung beschichtet werden:

| | | |
|---|---|---|
| 1. CH₃COOH (60%) | 0,15 - 0,30 | Ma.-% |
| 2. Polyvinylalkohol-Polyether und/oder Polyvinylpyrrolidon | 0,03 - 0,10 | Ma.-% |
| 3. Aminosilan oder Methacrylsilan und/oder Epoxysilan | 0,30 - 0,80 | Ma.-% |
| 4. Wasser als Rest bis auf 100 Ma.-% der wässrigen Präparation. | | |

Es hat sich als besonders vorteilhaft erwiesen, dass der Silanhaftvermittler als γ-Aminopropyltriethoxysilan, als ein γ-Methacryloxypropyltrimethoxysilan oder als ein γ-Glycidiloxypropyltrimethoxysilan in die wässrige finishähnliche Präparation eingeführt wird.
Diese Kupplungsmittel sind als Primer allgemein bekannt.
Zum Einstellen des gewünschten pH-Wertes wird der wässrigen Präparation Essigsäure zugesetzt.
Es hat sich als besonders vorteilhaft erwiesen, dass die Faserpräparation, d. h. die wasserfreien Präparationsanteile der wässrigen finishähnlichen Präparation, auf Festkörperkonzentration umgerechnet 8,0 bis 12,0 Ma.-% des Filmbildners und 88 bis 92 Ma.-% des Haftmittels enthält. Bei diesen Komponentenmengen und bei diesem Mengenverhältnis sind alle oben erwähnten positiven Eigenschaften der erfindungsgemäßen Präparation (Sizing) und damit hergestellten Fasern besonders gut ausgeprägt.

Es ist weiterhin bevorzugt, dass die Netzmittelmenge im Bereich von 0,00001 Ma.-% bis 0,0015 Ma.-% des Sizing liegt.

Das erfindungsgemäße Verfahren zur Behandlung der Fasern mit der erfindungsgemäßen wässrigen finishähnlichen Präparation erfolgt durch deren Auftragen auf die Glasfaseroberfläche, Entfernung des überschüssigen Sizings und thermische Behandlung der beschichteten Glasfasern.
Die Auftragung der erfindungsgemäßen wässrigen finishähnlichen Präparation erfolgt mit Sprühdüsen oder mittels einer Galette (Applikator). Das überschüssige Sizing (Schlichte)wird entfernt und die beschichteten Fasern im Rahmen einer thermischen Behandlung getrocknet.
Überflüssiges Sizing ist im Sinne der Erfindung die Menge der Präparation, die von den Einzelfilamenten nicht aufgenommen und während des Aufwickelns abgeschleudert wird.

Dabei hat es sich als besonders vorteilhaft erwiesen, dass die thermische Behandlung im Temperaturbereich von 100° C bis 150° C durchgeführt wird. Diese Trocknung erfolgt in einem Hochfrequenztrockner, in einem elektrisch beheizten, konventionellen Kammertrockner bzw. in einem Mikrowellentrockner.
Es hat sich gezeigt, dass der wasserfreie Präparationsanteil bezogen auf die Fasern 0,3 bis 1,0 Ma.-% beträgt. Die vorliegende Erfindung soll anhand der nachfolgenden Beispiele näher erläutert werden. Die Herkunft der verwendeten Komponenten ist jeweils in Klammern angegeben.

Diese Aufgabe der Erfindung wird außerdem durch eine Faser, beschichtet mit einem wässrigen Sizing nach einem der Ansprüche 1 bis 8 und nach einem Verfahren gemäß den Ansprüchen 10 oder 11 gelöst.

Die Erfindung betrifft weiterhin die mit der vorstehend beschriebenen finishähnlichen Präparation beschichteten Roving- bzw. Glasstapelfasern als auch daraus hergestellten Produkte wie z.B. Gewebe, Gelege, Glasfasermatten, Glasfaservliese u. ä..

### Beispiel 1:

### Herstellung einer erfindungsgemäßen wässrigen finishähnlichen Präparation PF34

### Zusammensetzung:

| | | | |
|---|---|---|---|
| 1. CH₃COOH (60%) | - | 0,20 | Ma.-% |
| 2. Polyvinylpyrrolidon PVP K90 (20%) | - | 0,10 | Ma.-% |
| 3. Polyvinylalkohol-Polyether (20%) | - | 0,10 | Ma.-% |
| 4. γ-Methacryloxypropyltrimethoxysilan | - | 0,30 | Ma.-% |
| 5. Wasser | - | 99,20 | Ma.-% |

### 100 kg Sizing enthält:

| | | | |
|---|---|---|---|
| 1. CH₃COOH (60%) | - | 0,20 | kg |
| 2. Polyvinylpyrrolidon PVPK90 (20%) | - | 0,10 | kg |
| 3. Polyvinylalkohol-Polyether (20%) | - | 0,10 | kg |
| 4. γ-Methacryloxypropyltrimethoxysilan | - | 0,30 | kg |
| 5. Wasser | - | 99,20 | kg |

### Verfahrensweise - Mixvorgang 100 kg:

1. 85,0 kg Wasser wird vorgelegt. + 0,18 kg CH₃COOH (60%) werden vorgelegt.
2. 0,3 kg γ-Methacryloxypropyltrimethoxysilan (A 174) + 20 g CH₃COOH (60%) wird mit 3,5 kg heißem entionisiertem Wasser hydrolysiert.
3. Zugabe der Hydrolysatlösung.
4. 0,10 kg Polyvinylpyrrolidon PVP K90 aufgelöst in 2 kg Heißwasser wird dem Ansatz zugesetzt.
5. 0,10 kg Polyvinylalkohol-Polyether (Arkofil CS20-20%) wird dem Ansatz zugegeben.
6. Zugabe der restlichen Wassermenge (8,8 kg) + ca. 1g eines Netzmittels (Surfynol 440).
7. Rühren der Präparation und pH-Wertbestimmung.

| Festkörperzusammensetzung: | | | |
|---|---|---|---|
| 1. Polyvinylpyrrolidon | - | 5,9 | Ma.-% |
| 2. Polyvinylalkohol-Polyether | - | 5,9 | Ma.-% |
| 3. Methacrylsilan | - | 88,2 | Ma.-% |

Festkörperkonzentration : Fₖ = 0,34 Ma.-%

### Beispiel 2:

### Herstellung einer erfindungsgemäßen wässrigen finishähnlichen Präparation PF35

### Zusammensetzung:

| | | |
|---|---|---|
| 1. CH₃COOH (60%) | 0,20 | Ma.-% |
| 2. Polyvinylpyrrolidon PVP K90 (20%) | 0,12 | Ma.-% |
| 3. Polyvinylalkohol-Polyether (20%) | 0,12 | Ma.-% |
| 4. γ-Methacryloxypropyltrimethoxysilan | 0,20 | Ma.-% |
| 5 γ-Glycidiloxypropyltrimethoxysilan^{(5,6)} | 0,20 | Ma.-% |
| 6. Wasser | 99,16 | Ma.-% |

### 100 kg Sizing enthält:

| | | |
|---|---|---|
| 1. CH₃COOH (60%) | 0,20 | kg |
| 2. Polyvinylpyrrolidon PVPK90 (20%) | 0,12 | kg |
| 3. Polyvinylalkohol-Polyether (20%) | 0,12 | kg |
| 4. γ-Methacryloxypropyltrimethoxysilan | 0,20 | kg |
| 5. γ-Glycidiloxypropyltrimethoxysilan | 0,20 | kg |
| 6. Wasser | 99,16 | kg |

### Verfahrensweise - Mixvorgang 100 kg:

1. 85,0 kg Wasser wird vorgelegt. + 0,17kg CH₃COOH (60%) werden vorgelegt.
2. 0,2 kg γ-Methacryloxypropyltrimethoxysilan (A 174) + 0,2 kg γ-Glycidiloxypropyltrimethoxysilan wird mit 30 g CH₃COOH (60%) versehen und mit 3,5 kg entionisiertem Heißwasser hydrolysiert.
3. Zugabe der Hydrolysatlösung.
4. 0,12 kg Polyvinylpyrrolidon PVP K90 aufgelöst in 2 kg Heißwasser wird dem Ansatz zugesetzt.
5. 0,12 kg Polyvinylalkohol-Polyether (Arkofil CS20-20%) wird dem Ansatz zugegeben.
6. Zugabe der restlichen Wassermenge (8,76 kg) + ca. 1g eines Netzmittels (Surfynol 440).
7. Rühren des Sizings und pH-Wertbestimmung.

### Festkörperzusammensetzung:

| | | | |
|---|---|---|---|
| 1. Polyvinylpyrrolidon | - | 5,4 | Ma.-% |
| 2. Polyvinylalkohol-Polyether | - | 5,4 | Ma.-% |
| 3. Methacrylsilan | - | 44,6 | Ma.-% |
| 4. Epoxysilan | - | 44,6 | Ma.-% |
| Festkörperkonzentration : Fₖ = 0,45 Ma.-% | | | |

### Beispiel 3

### Herstellung einer erfindungsgemäßen wässrigen finishähnlichen Präparation PF36

### Zusammensetzung:

| | | |
|---|---|---|
| 1. CH₃COOH (60%) | 0,20 | Ma.-% |
| 2. Polyvinylpyrrolidon PVP K90 (20%) | 0,12 | Ma.-% |
| 3. Polyvinylalkohol-Polyether (20%) | 0,12 | Ma.-% |
| 4. γ-Glycidiloxypropyltrimethoxysilan | 0,40 | Ma.-% |
| 5. Wasser | 99,16 | Ma.-% |

### 100 kg Sizing enthält:

| | | |
|---|---|---|
| 1. CH₃COOH (60%) | 0,20 | kg |
| 2. Polyvinylpyrrolidon PVPK90 (20%) | 0,12 | kg |
| 3. Polyvinylalkohol-Polyether (20%) | 0,12 | kg |
| 4. γ-Glycidiloxypropyltrimethoxysilan | 0,40 | kg |
| 5. Wasser | 99,16 | kg |

### Verfahrensweise - Mixvorgang 100 kg

1. 85,0 kg Wasser wird vorgelegt. + 0,17 kg CH₃COOH (60%) werden vorgelegt.
2. 0,4 kg γ-Glycidiloxypropyltrimethoxysilan + 30 g CH₃COOH (60%) wird mit 3,5 kg entionisiertem Heißwasser hydrolysiert.
3. Zugabe der Hydrolysatlösung.
4. 0,12 kg Polyvinylpyrrolidon PVP K90 aufgelöst in 2 kg Heißwasser wird dem Ansatz zugesetzt.
5. 0,12 kg Polyvinylalkohol-Polyether (Arkofil CS20-20%) wird dem Ansatz zugegeben.
6. Zugabe der restlichen Wassermenge (8,76 kg) + ca. 1g eines Netzmittels (Surfynol 440).
7. Rühren der Präparation und pH-Wertbestimmung.

### Festkörperzusammensetzung:

| | | | |
|---|---|---|---|
| 1. Polyvinylpyrrolidon | - | 5,4 | Ma.-% |
| 2. Polyvinylalkohol-Polyether | - | 5,4 | Ma.-% |
| 3. Epoxysilan | - | 89,2 | Ma.-% |

Festkörperkonzentration : Fₖ = 0,45 Ma.-%

## Patentansprüche

1. Wässriges Sizing zur Behandlung von R-, E- ECR- und S-Glasfasern, **dadurch gekennzeichnet, dass** dieses, neben Wasser und CH₃COOH, ausschließlich aus einem Netzmittel, wobei die Netzmittelmenge in der Zusammensetzung unter 0,0015% Ma.-% liegt, einem Zweikomponenten-Filmbildner und einem Ein- oder aus einem Zweikomponenten-Haftvermittler besteht.

2. Sizing nach Anspruch 1, **dadurch gekennzeichnet, dass** der Filmbildner aus einem Polyvinylalkohol-Polyether und/oder einem Polyvinylpyrrolidon besteht.

3. Sizing nach einem der Ansprüche 1 oder 2, **dadurch gekennzeichnet, dass** sie einen Silan- Haftvermittler enthält.

4. Sizing nach einem der Ansprüche 1 oder 2, **dadurch gekennzeichnet, dass** sie zwei Silan- Haftvermittler enthält.

5. Sizing nach einem der Ansprüche 1, 2, 3 oder 4, **dadurch gekennzeichnet, dass** sie:
0,15 - 0,30 Ma.-% CH₃COOH (60%),
0,03 - 0,10 Ma.-% Polyvinylalkohol-Polyether
und/oder Polyvinylpyrrolidon,
0,30 - 0,80 Ma.-% Aminosilan oder Methacrylsilan oder Epoxysilan
und soviel Wasser enthält, dass 100 Ma. % Sizing resultieren.

6. Sizing nach Anspruch 5, **dadurch gekennzeichnet, dass** der Silanhaftvermittler entweder ein γ-Methacryloxypropyltrimethoxysilan, ein γ-Aminopropyltriethoxysilan oder ein γ-Glycidiloxypropyltrimethoxysilan, die zu Silanolen hydrolysierbar sind, ist.

7. Sizing nach einem der Ansprüche 1 bis 6, **dadurch gekennzeichnet, dass** sie bezogen auf die Feststoffkonzentration des wässrigen Sizing 8,0 bis 12,0 Ma.-% des Filmbildners und 88 bis 92 Ma.-% des Haftmittels enthält, wobei die Summe aus Filmbildner und Haftvermittler immer 100 Ma.-% ergibt.

8. Sizing nach Anspruch 1, **dadurch gekennzeichnet, dass** die Netzmittelmenge im Bereich von 0,00001 Ma.-% bis 0,0015 Ma.-% des Sizing liegt.

9. Verwendung eines wässrigen Sizing zur Behandlung von R-, E- ,ECR- oder S-Glasfasern, gemäß den Ansprüchen 1 bis 8, für die Roving- bzw. Glasstapelfaserherstellung.

10. Verfahren zur Behandlung von R-, E-, ECR- oder S-Glasfasern mit einem wässrigen Sizing nach einem der Ansprüche 1 bis 8, wobei das Verfahren zumindest durch deren Auftragen auf eine Glasfaseroberfläche, Entfernung des überschüssigen Sizings und eine nachfolgende thermische Behandlung der beschichteten Glasfasern erfolgt.

11. Verfahren gemäß Anspruch 10, **dadurch gekennzeichnet, dass** das Auftragung des wässrigen Sizing mit Sprühdüsen oder mittels einer Galette (Applikator) erfolgt.

12. Fasern aus R-, E-, ECR- oder S- Glas oder Glasfaserprodukte beschichtet mit einem wässrigen Sizing nach einem der Ansprüche 1 bis 8 und nach einem Verfahren gemäß den Ansprüchen 10 oder 11.

13. Fasern gemäß Anspruch 12, **dadurch gekennzeichnet, dass** deren Präparationsgehalt als Feststoff bezogen auf die Glasfasern 0,3 bis 1,2 Ma.-% beträgt.

14. Faser gemäß Anspruch 12, **dadurch gekennzeichnet, dass** die Fasern aus R-, S-, E-oder ECR- Glas bestehen oder Glasfaserprodukte, insbesondere Gewebe, Gelege, Glasfasermatten und/oder Glasfaservliese hergestellt aus diesen Fasern, sind.
